Europäisches Patentamt

European Patent Office

Office européen des brevets

(11) Numéro de publication: **0 306 424**
**A1**

## (12) DEMANDE DE BREVET EUROPEEN

(21) Numéro de dépôt: 88420300.1

(22) Date de dépôt: 05.09.88

(51) Int. Cl.⁴: **F 16 L 37/08**
F 16 B 21/20, H 02 G 3/06

(30) Priorité: 04.09.87 FR 8712711

(43) Date de publication de la demande:
08.03.89 Bulletin 89/10

(84) Etats contractants désignés:
AT BE CH DE ES GB GR IT LI LU NL SE

(71) Demandeur: PARKER HANNIFIN RAK S.A.
Z.I. du Mont-Blanc Ville-La-Grand B.P. 482
F-74108 Annemasse Cédex (FR)

(72) Inventeur: Badoureaux, Jean-Pierre
Fillinges
F-74250 Viuz en Sallaz (FR)

(74) Mandataire: Maureau, Pierre et al
Cabinet GERMAIN & MAUREAU B.P. 3011
F-69392 Lyon Cédex 03 (FR)

(54) **Griffe annulaire pour raccord rapide de tube souple ou rigide.**

(57) Cette griffe qui est utilisable aussi bien avec les raccords rapides désaccouplables qu'avec ceux qui ne le sont pas, est du type constitué par une pièce annulaire (2) en acier à ressort, présentant des dents (4) orientées radialement vers l'intérieur et dont les bords libres (4a) s'inscrivent dans un cercle (5) de diamètre (D₁) supérieur au diamètre extérieur (D₂) du tube (6) auquel est destiné le raccord rapide équipé de cette griffe.

Chaque dent (4) présente un bord libre (4a) en arc de cercle de rayon (R) inférieur à celui du cercle (5) dans lequel ce bord libre (4a) est inscrit.

FIG-2

EP 0 306 424 A1

Bundesdruckerei Berlin

## Description

### "Griffe annulaire pour raccord rapide de tube souple ou rigide"

La présente invention concerne une griffe annulaire pour raccord rapide de tube souple ou rigide, cest-à-dire en matière plastique ou en métal tel qu'en aluminium, cuivre ou acier, et qui soit utilisable aussi bien avec les raccords rapides désaccouplables qu'avec ceux qui ne le sont pas.

Dans les raccords rapides, on prévoit une griffe annulaire, c'est-à-dire une pièce annulaire présentant des dents orientées radialement vers l'intérieur dont les bords s'inscrivent dans un cercle de diamètre légèrement inférieur à celui extérieur du tube à coupler avec-ce raccord.

De préférence, pour obtenir une meilleure retenue du tube dans le raccord tout en facilitant son introduction, les dents de la griffe sont inclinées légèrement en direction du fond du raccord.

Si la griffe est en matière rigide, on obtient généralement une bonne tenue mais le couplage est indémontable.

Si la griffe est en matière souple et élastique, telle qu'en acier, pour pouvoir être ouverte par un poussoir tubulaire de désaccouplage, la tenue du tube est insuffisante, notamment si ce tube est en métal dur tel qu'en acier.

En outre, la liaison en rotation du tube avec la griffe est insuffisante pour s'opposer au striage du tube et même à son dévissage.

La présente invention vise à remédier à ces inconvénients. A cet effet, dans la griffe qu'elle concerne et qui est du type précité, en acier à ressort, chaque dent présente un bord libre en arc de cercle de rayon inférieur à celui du cercle dans lequel s'inscrivent les bords libres de toutes les dents et qui est lui-même inférieur à celui externe du tube.

Cette forme des dents crée des pointes extrêmes latérales qui s'ancrent dans le tube en lui procurant une bonne tenue axiale et en rotation.

Suivant une autre caractéristique de l'invention, les intervalles entre dents ou encoches ont une forme évasée en direction de leur fond contribuant à la formation, aux extrémités libres des bords des dents, de cornes latérales extrêmes procurant une meilleure souplesse élastique aux dents, qui s'orientent plus librement lors de leur ancrage dans le tube.

Suivant une autre caractéristique de l'invention, il est prévu, à la périphérie de la griffe, une collerette tubulaire qui lui procure une meilleure rigidité périphérique et, par conséquent, une excellente tenue axiale dans le corps du raccord.

De toute façon, l'invention sera bien comprise à l'aide de la description qui suit, en référence au dessin schématique annexé représentant, à titre d'exemple non limitatif, une forme d'exécution de cette griffe annulaire pour raccord rapide :

Figure 1 en est une vue de face en élévation ;

Figure 2 en est une vue en coupe suivant II-II de figure 1.

Cette griffe annulaire 2, qui est destinée aussi bien aux raccords rapides désaccouplables qu'à ceux qui ne le sont pas, est du type constitué par une pièce annulaire, en acier à ressort, présentant des dents 4 orientées radialement vers l'intérieur et dont les bords libres 4a s'inscrivent dans un cercle 5 d'un diamètre $D_1$ supérieur au diamètre extérieur $D_2$ du tube 6 auquel est destiné le raccord rapide équipé de cette griffe annulaire 2.

Comme cela est connu en soi, la partie centrale 3 de la griffe annulaire 2 est emboutie de manière à se présenter sous la forme d'un cône ayant pour effet d'arrêter chaque dent 4 en direction du fond du raccord rapide auquel est destiné cette griffe 2 et qui n'est pas représenté sur le dessin. Cette disposition connue a pour effet, d'une part, de faciliter l'engagement du tube 6 dans le raccord rapide et, d'autre part, d'assurer, dans de meilleures conditions, sa tenue à l'intérieur de ce raccord, à l'encontre des forces de pression qui tendent éventuellement à l'en expulser, que ce tube soit souple, tel qu'en matière plastique, ou rigide tel qu'en métal comme l'aluminium, le cuivre ou l'acier.

Selon l'invention, le bord libre 4a de chaque dent 4 est profilé en arc de cercle de rayon R inférieur à celui du cercle 5 dans lequel s'inscrivent les bords libres 4a des dents 4.

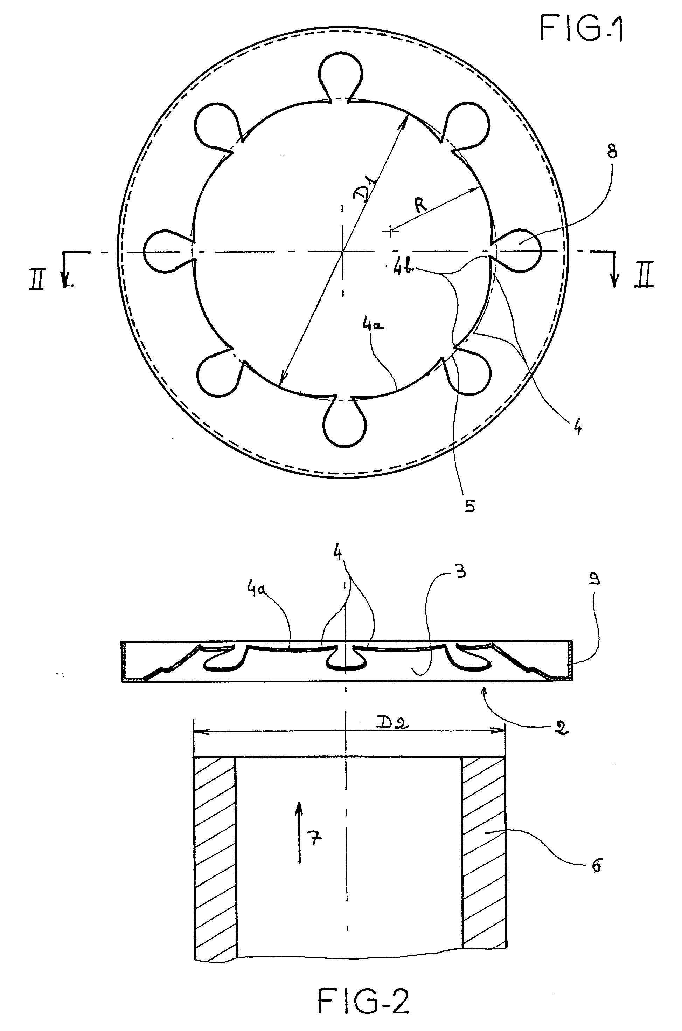

Cette configuration des bords libres 4a des dents 4 engendre la formation, dans le bord libre 4a de chaque dent 4, de pointes latérales extrêmes 4b susceptibles de s'ancrer dans la paroi du tube 6 lorsque ce dernier est engagé dans la griffe 2, comme indiqué par la flèche 7 de figure 2. En effet, le fait que le rayon de courbure R du bord libre 4a de chaque dent 4 soit inférieur au rayon de courbure du cercle 5 dans lequel s'inscrivent les bords libres 4a des dents 4 et, à plus forte raison, du rayon de courbure de la face externe du tube 6, a pour effet que chaque dent 4 ne prend appui contre la face externe du tube 6 que par l'intermédiaire de ses pointes latérales extrêmes 4b, ce qui améliore considérablement la force de pénétration de chaque dent 4 dans la paroi du tube 6.

La formation des pointes latérales extrêmes 4b des dents 4 peut être encore amplifiée en conférant aux intervalles entre dents ou encoches 8 un profil divergent en direction du fond de l'encoche, comme cela ressort nettement de l'examen de la figure 1. Il en résulte que chaque pointe latérale extrême 4b constitue alors une véritable corne d'ancrage dont la souplesse facilite en outre la libre orientation.

Suivant une autre caractéristique de l'invention, il est prévu, à la périphérie de la griffe 2, une collerette tubulaire 9 qui lui procure une meilleure rigidité périphérique et, par conséquent, une meilleure tenue axiale dans le corps du raccord.

## Revendications

1.- Griffe annulaire pour raccord rapide de tube souple ou rigide, utilisable aussi bien avec les raccords rapides désaccouplables qu'avec ceux qui ne le sont pas, du type constitué par une pièce annulaire (2) en acier à ressort, présentant des dents (4) orientées radialement vers l'intérieur et dont les bords libres (4a) s'inscrivent dans un cercle (5) de diamètre ($D_1$) supérieur au diamètre extérieur ($D_2$) du tube (6) auquel est destiné le raccord rapide équipé de cette griffe, **caractérisée** en ce que chaque dent (4) présente un bord libre (4a) en arc de cercle de rayon (R) inférieur à celui du cercle (5) dans lequel ce bord libre (4a) est inscrit.

2.- Griffe annulaire selon la revendication 1, caractérisée en ce que sa partie centrale (3) est emboutie de manière à se présenter sous la forme d'un tronc de cône dont l'extrémité de petit diamètre est destinée à être orientée en direction du fond du raccord.

3.- Griffe annulaire selon la revendication 1 ou la revendication 2, caractérisée en ce que les intervalles entre dents ou encoches (8) ont une forme évasée en direction de leur fond, contribuant à la formation de cornes latérales extrêmes (4b) procurant aux dents (4) une meilleure souplesse élastique facilitant leur libre orientation par rapport au tube (6).

4.- Griffe annulaire selon l'une quelconque des revendications I à 3, caractérisée en ce qu'il est prévu, à sa périphérie, une collerette tubulaire (9).

EP 0 306 424 A1

FIG·1

FIG-2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 846 103  (FISCHER)<br>* Page 1, alinéa 1; page 2, alinéas 1,5; page 3, alinéa 4; figures 1,2 *<br>--- | 1-4 | F 16 L   37/08<br>F 16 B   21/20<br>H 02 G    3/06 |
| A | US-A-4 635 975  (CAMPBELL)<br>* Colonne 2, lignes 36-61; colonne 3, lignes 19-36; figure 3 *<br>----- | 1-3 | |

DOMAINES TECHNIQUES
RECHERCHES (Int. Cl.4)

F 16 L
F 16 B
H 02 G

Le présent rapport a été établi pour toutes les revendications

| Lieu de la recherche | Date d'achèvement de la recherche | Examinateur |
|---|---|---|
| LA HAYE | 01-12-1988 | ARESO Y SALINAS J. |